# EUROPÄISCHE PATENTSCHRIFT

(11) **EP 2 165 986 B1**
(45) Veröffentlichungstag und Bekanntmachung des Hinweises auf die Patenterteilung: **15.03.2017**
(21) Anmeldenummer: 09010080.1
(22) Anmeldetag: 04.08.2009
(51) Int. Cl.: C03C 3/118, C03C 4/00, C03C 4/10, C03C 27/02

(54) **Glas und Verwendung eines Glases für Glas-Metall-Verbindungen**
Glass and use of a glass for glass-metal compounds
Verre et utilisation d'un verre pour liaisons verre-métal

(30) Priorität: 16.09.2008 DE 102008047280
(43) Veröffentlichungstag der Anmeldung: 24.03.2010
(73) Patentinhaber: Schott AG, 55122 Mainz (DE)
(72) Erfinder: Collignon, Johann, Dr., 95643 Tirschenreuth (DE); Tratzky, Stephan, Dr., 92660 Neustadt/Wn. (DE); Dick, Erhard, 95701 Pechbrunn (DE); Zettl, Wolfgang, 95666 Mitterteich (DE)

(56) Entgegenhaltungen:
- EP-A1- 0 992 462

## Beschreibung

Die Erfindung bezieht sich auf die Verwendung eines Glases für Glas-Metall-Verbindungen. Die Erfindung bezieht sich auch auf das Glas selbst.

Glas-Metall-Verbindungen werden beispielsweise bei Vakuum-Röhrenkollektoren eingesetzt. Bei den Vakuum-Röhrenkollektoren ist ein vakuumdichter Glasmetallverbund zur thermischen Isolation zwischen dem aus Metall bestehenden Absorberrohr und dem aus Glas bestehenden Hüllrohr erforderlich.

Solche Röhrenkollektoren werden beispielsweise in Parabolrinnen-Solarkraftwerken eingesetzt.

In Parabolrinnen-Solarkraftwerken werden durch die konzentrierte Strahlung in den Kollektoren Arbeitstemperaturen bis 400°C mit starken lokalen Temperaturunterschieden erzeugt. Hinzu treten die durch den Tagesrhythmus und zeitweilige Bewölkungsphasen bedingten ständigen Belastungen durch Temperaturwechsel.

Bei den Hochtemperatur-Solarkollektoren wurden bislang zum einen sogenannte nicht angepasste Glas-Metall-Verbindungen eingesetzt. Ihr Name rührt daher, dass Glas und Metall unterschiedliche thermische Ausdehnungskoeffizienten aufweisen. Zum anderen werden sogenannte angepasste Glas-Metall-Verbindungen eingesetzt, wobei eine Realisierungsmöglichkeit der Anpassung der Einsatz von mehreren Zwischengläsern ist. Dieser Weg weist aber verschiedene Nachteile auf.

Aus der DE 10 2004 008 559 A1 ist eine Glas-Metall-Verbindung eines Röhrenkollektors bekannt, bei der ein Aluminiumborosilikatglas verwendet wird, das auch als Material für Pharmaprimärpackmittel dient. Es ist nicht speziell an die Anforderungen eines Glases für Röhrenkollektoren und an die Anforderungen an die Herstellung eines solchen Glases angepasst. Ein ähnlicher Glaszusammensetzungsbereich eines Glases u. a. für die Solarthermie ist in der DE 10 2006 041 469 B3 beschrieben. Aus DE 44 30 710 C1 sind borarme Borosilicatgläser bekannt, die einen thermischen Ausdehnungskoeffizienten α_{20/300} ≤ 5,3 x 10⁻⁶/K aufweisen.

Der Receiver als das Kernstück eines Röhrenkollektors für ein Parabolrinnen-Solarkraftwerk besteht aus einem inneren Rohr aus Stahl und einem äußeren Hüllrohr aus Glas. Beide Komponenten müssen über Glas-Metall-Verbindungen vakuumdicht verbunden werden.

Das Stahlrohr (Absorberrohr) ist mit einem strahlungsselektiven Material beschichtet, um eine hohe Absorptionsrate zu gewährleisten.

Das Hüllrohr benötigt einen an das Metall angepassten thermischen Ausdehnungskoeffizienten.

Das Vakuum zwischen Hüllrohr und Absorberrohr reduziert den Wärmeverlust und liefert einen Beitrag zur optimalen Wärmeausbeute.

Das Hüllrohr ist mit einer Antireflexschicht versehen, die zusammen mit der geforderten hohen Transmission des Glases zu einem hohen Transmissionsgrad von wenigstens 96 % führen soll.

Das Hüllrohr benötigt eine hohe Temperatur- und Temperaturwechselbeständigkeit, eine hohe Witterungsbeständigkeit, so eine hohe hydrolytische Beständigkeit, eine hohe mechanische Stabilität, so eine hohe Zugfestigkeit.

Es soll trotz seiner hohen, insbesondere thermischen Belastbarkeit gut und möglichst wenig energieintensiv schmelzbar sein. Außerdem sollen alle diese Glas- und Herstellungseigenschaften mit möglichst geringen Herstell- und Rohstoffkosten erzielbar sein.

Aufgabe der Erfindung ist es daher, ein Glas für eine angepasste Glas-Metall-Verbindung eines Röhrenkollektors zu finden, das die genannten Anforderungen erfüllt.

Diese Aufgabe wird durch ein Glas, das folgende Bestandteile in folgender Zusammensetzung enthält:

| | | |
|---|---|---|
| SiO₂ | 73 - 77 | Gew.-% |
| B₂O₃ | 6 - < 8 | Gew.-% |
| Al₂O₃ | 6 - 6,5 | Gew.-% |
| Na₂O | 5,5 - 7 | Gew.-% |
| K₂O | 1 - 3 | Gew.-% |
| CaO | 0,5 - 3,2 | Gew.-% |
| MgO | 0 - 2 | Gew.-% |
| Fe₂O₃ | 50 - 150 | ppm |
| TiO₂ | 0 - < 100 | ppm, |

wobei das Verhältnis der Summe der Erdalkalioxide (RO) zur Summe der Alkalioxide (R₂O), jeweils in mol-%, ≤ 0,6 beträgt, und durch seine Verwendung für ein Glasrohr in einem Röhrenkollektor mit einer Glas-Metall-Verbindung gelöst.

Die Beschränkung auf den genannten geringen CaO-Gehalt unterstützt die gewünschten niedrigen Schmelztemperaturen.

Die Einstellung des gewünschten thermischen Ausdehnungskoeffizienten wird erleichtert durch das genannte Verhältnis Σ RO / Σ R₂O.

Ähnliche, relativ borarme Gläser sind bereits aus DE 100 35 801 A1 für die Verwendung als Primärpackmittel bekannt, wie z.B. für Spritzen, Karpulen, Fläschchen und Reagenzgläser. Für die Herstellung solcher pharmazeutischer Primärpackmittel wird von Glasrohren mit einem maximalen Außendurchmesser von 30 mm ausgegangen. Auch sind ähnliche Gläser, die ebenfalls nur zu Rohren mit sehr geringen Durchmessern verarbeitet werden, nämlich zu Backlights, aus DE 10 2004 027 120 A1 und DE 10 2004 027 119 A1 bekannt.

Die Verwendung solcher borarmer Gläser zur Herstellung von Glasrohren für die Solarthermie, die einen Durchmesser von mehr als 120 mm aufweisen müssen und für die Verwendung in Glas-Metall-Verbindungen wurde bisher nicht in Betracht gezogen. Dies ist darauf zurückzuführen, dass bisher nicht erkannt wurde, dass diese Gläser Eigenschaften vereinen, die für die Verwendung in Vakuumröhrenkollektoren besser als die bisher verwendeten Gläser geeignet sind.

Die erfindungsgemäßen Gläser besitzen einen für ihre erfindungsgemäße Verwendung wesentlichen thermischen Ausdehnungskoeffizienten von > 5,3 x 10⁻⁶/K bis 5,8 x 10⁻⁶/K, insbesondere von ca. 5,7 x 10⁻⁶/K, was nur um etwa 10% von den thermischen Ausdehnungskoeffizienten gängiger Metalle abweicht. Die Gläser sind ferner säure- und laugenbeständig (Klasse S1 und A2 nach DIN 12116 und DIN ISO 695) sowie wasserbeständig (Klasse HGB 1, DIN ISO 719). Außerdem lassen sich diese Gläser auch problemlos zu Rohren mit Außendurchmessern > 120 mm verarbeiten. Diese vorteilhaften Eigenschaften machen die Verwendung von Übergangsgläsern überflüssig, so dass ein industriell automatisierbarer Herstellungsprozess möglich ist. Ferner besitzen sie einen geringen Eisengehalt, was auf Grund der Transmissionsanforderungen für Hüllrohre in Vakuumröhrenkollektoren besonders wichtig ist. Den geringen Eisengehalt weiß der Fachmann durch die Auswahl geeigneter eisenarmer Rohstoffe zu erzielen. Dabei beträgt das Verhältnis Fe²⁺ / Fe³⁺, bevorzugt 0,03 - 0,1, besonders bevorzugt 0,045 - 0,055. Diese Verhältnisse werden gewährleistet durch den Einsatz ausreichender Nitratanteile im Gemenge. So werden beispielsweise ca. 0,5 - 1,2 Gew.-% Nitrat eingesetzt, vorzugsweise 0,8 - 1,0 Gew.-%, beispielsweise als Natriumnitrat oder Aluminiumnitrat.

Bevorzugt ist ein Glas und seine Verwendung, das folgende Bestandteile in folgender Zusammensetzung enthält:

| | | |
|---|---|---|
| SiO₂ | 73 - 77 | Gew.-% |
| B₂O₃ | 6,7 - 7,5 | Gew.-% |
| Al₂O₃ | 6,3 - 6,5 | Gew.-% |
| Na₂O | 5,8 - 6,8 | Gew.-% |
| K₂O | 1 - 2 | Gew.-% |
| CaO | 2,5 - 3,2 | Gew.-% |
| MgO | 0,4 - 1 | Gew.-% |
| Fe₂O₃ | 70 - 130 | ppm |
| TiO₂ | 0 - < 100 | ppm. |

wobei das Verhältnis der Summe der Erdalkalioxide (RO) zur Summe der Alkalioxide (R₂O), jeweils in mol-%, ≤ 0,6 beträgt

Das Glas kann mit üblichen Läutermitteln in üblichen Mengen geläutert werden. Bevorzugt enthält das verwendete Glas 0,1 - 0,3 Gew.-% Chlorid und / oder 0,1 - 0,3 Gew.-% Fluorid. Der Fachmann weiß den Gehalt an in der Schmelze leicht flüchtigen Fluoriden im Gemenge so auszuwählen, dass der genannte Anteil im fertigen Glas vorhanden ist.

Das Glas ist vorzugsweise TiO₂-frei. Geringe Mengen an TiO₂ können jedoch beispielsweise über den Rohstoff Tonerde ins Glas hineinkommen. Der Gehalt an TiO₂ ist aber auf < 100 ppm beschränkt.

Das Glas kann zur Variation des Ausdehnungskoeffizienten α_{20/300} noch weitere Komponenten wie Li₂O, BaO in Mengen von maximal 1% enthalten, die die für die Verwendung geforderten Eigenschaften nicht nachteilig beeinflussen.

Bevorzugt besteht das Glas bis auf Verunreinigungen, z. B. an V₂O₅, aus den Komponenten SiO₂, B₂O₃, Al₂O₃, Na₂O, K₂O, CaO, ggf. MgO, Fe₂O₃ und ggf. TiO₂ in den genannten Mengen.

In einer bevorzugten Ausführungsform beträgt die Summe der im Glas vorhandenen Erdalkalioxide ≤ 3,9 mol-%. Dadurch wird die Einstellung von α_{20/300} in den beschriebenen Grenzen von > 5,3 - 5,8 * 10⁻⁶/K vereinfacht. Bevorzugt ist eine Untergrenze der Summe der im erfindungsgemäß verwendeten Glas vorhandenen Erdalkalioxide von > 0,9 mol-%. Dadurch wird das Erreichen einer niedrigen Schmelztemperatur erleichtert.

Bei den besonders bevorzugt verwendeten Gläsern, die bis auf Verunreinigungen als Erdalkalioxide nur CaO und MgO enthalten, gilt für diese bevorzugte Ausführungsform CaO + MgO ≤ 3,9 mol-%.

Bei den Gläsern, die als Erdalkalioxid nur CaO enthalten, ist die Obergrenze durch den Maximalgehalt von 3,2 Gew.-% CaO vorgegeben.

In einer weiteren bevorzugten Ausführungsform beträgt das Verhältnis der im Glas vorhandenen Erdalkalioxide (in mol-%) zu der Summe der vorhandenen Alkalioxide (in mol-%) < 0,55. Auch dadurch wird die Einstellung von α_{20/300} im gewünschten Bereich erleichtert. Außerdem wirkt sich das angegebene Verhältnis besonders günstig auf die Zugfestigkeit aus. Bevorzugt ist eine Untergrenze dieses Verhältnisses von > 0,1.

Bei den besonders bevorzugt verwendeten Gläsern, die als Alkalioxide nur Na₂O und K₂O und bis auf Verunreinigungen als Erdalkalioxide nur CaO und ggf. MgO enthalten, gilt für diese bevorzugte Ausführungsform (Na₂O + K₂O) / (CaO + MgO) < 0,55 bzw. (Na₂O + K₂O) / CaO < 0,55. Bevorzugt ist eine Untergrenze dieses Verhältnisses von > 0,1.

In einer weiteren bevorzugten Ausführungsform beträgt das Verhältnis von Al₂O₃ (in mol-%) zur Summe der Alkalioxide (in mol-%) im erfindungsgemäß verwendeten Glas < 0,6. Auch hierdurch wird insbesondere die Einstellung von α_{20/300} im gewünschten Bereich erleichtert. Ein Verhältnis ≤ 0,55 ist besonders bevorzugt. Ein Verhältnis von < 0,51 ist ganz besonders bevorzugt.
Bei den besonders bevorzugt verwendeten Gläsern, die als Alkalioxide nur Na₂O und K₂O enthalten, gilt für diese bevorzugte Ausführungsform Al₂O₃ / (Na₂O + K₂O) < 0,6, besonders bevorzugt ≤ 0,55, ganz besonders bevorzugt < 0,51.

In einer weiteren bevorzugten Ausführungsform beträgt das Verhältnis von B₂O₃ (in mol-%) zu der Summe aus B₂O₃ plus der Summe an Alkalioxiden (in mol-%) < 0,55. Dadurch wird die Schmelztemperatur weiter erniedrigt. Ein Verhältnis < 0,5 ist besonders bevorzugt. Es wirkt sich besonders günstig auf den Ausdehnungskoeffizienten aus.

Bei den besonders bevorzugt verwendeten Gläsern, die als Alkalioxide nur Na₂O und K₂O enthalten, gilt für diese bevorzugte Ausführungsform B₂O₃/ (B₂O₃ + Na₂O + K₂O) < 0,55. Ein Verhältnis von < 0,5 ist besonders bevorzugt.

In einer weiteren bevorzugten Ausführungsform beträgt das Verhältnis von SiO₂/B₂O₃ (jeweils in mol%) > 10,0. Dadurch kommt es zu einer Verbesserung der hydrolytischen Beständigkeit des Glases. Besonders ist ein Verhältnis SiO₂/B₂O₃ (jeweils in mol-%) von 13 ± 0,5.

Eine bevorzugte Verwendung sieht vor, dass das Metall der Glas-Metall-Verbindungen ein Metallwerkstoff der Gruppe Nr. 1.3981 der DIN 17745 ist. Dieser Werkstoff besitzt folgende Zusammensetzung (Massenanteile in %):

28 - 30 Ni, bis 0,05 C, 16 - 18 Co, Rest Fe.

Die Gläser können mit üblichen Läutermitteln, wie Sb₂O₃, As₂O₃, NaCl, BaCl, CaCl, MgCl, V₂O₅, Na₂SO₄, BaSO₄ in üblichen Mengen, also beispielsweise mit Zusätzen bis 0,5 Gew.-% geläutert werden. Vorzugsweise wird auf V₂O₅ verzichtet.

### Beispiele:

Es wurden drei Beispiele erfindungsgemäßer Gläser und zwei Gläser als Vergleichsbeispiele aus üblichen Rohstoffen geschmolzen.

Die Tabellen 1 und 3 zeigen für diese Ausführungsbeispiele A1 - A3 und Vergleichsgläser V1 - V2 die Zusammensetzungen in Gew.-% (Tabelle 1) sowie in mol-% zusammen mit verschiedenen Summen, Verhältnissen und Summenverhältnissen der Bestandteile (Tabelle 3). Tabelle 2 zeigt für die Ausführungsbeispiele und Vergleichsbeispiele folgende wichtige Eigenschaften:
- den thermischen Ausdehnungskoeffizienten α_{20/300} [10⁻⁶/K]
- die Transformationstemperatur T_{g} [°C]
- die Verarbeitungstemperatur V_{A} [°C]
- die Temperatur, bei der das Glas geschmolzen wurde, hier "Schmelztemperatur" [°C] genannt
- die relative hydrolytische Beständigkeit, gemessen gemäß ISO 719 und dann anhand von V2 normiert
- die relative Zugfestigkeit, berechnet und dann anhand von V2 normiert
- der relative Gemengepreis, normiert gegenüber V2
- die solare Transmission im Wellenlängenintervall 300 - 2500 nm [%]

**Tabelle 1**

| Zusammensetzungen (in Gew.-% auf Oxidbasis) von erfindungsgemäßen Gläsern (A) und Vergleichsgläsern (V) | | | | | |
|---|---|---|---|---|---|
| | A1 | A2 | A3 | V1 | V2 |
| SiO₂ | 74,5 | 74,5 | 75,6 | 75,5 | 74,0 |
| Al₂O₃ | 6,5 | 6,4 | 6,4 | 6,4 | 6,5 |
| Na₂O | 6,2 | 6,5 | 6,2 | 5,8 | 6,6 |
| K₂O | 2,6 | 2,0 | 2,2 | 1,0 | 2,6 |
| CaO | 2,0 | 2,8 | 2,9 | 3,1 | 0,7 |
| MgO | - | 0,5 | 0,4 | 0,4 | - |
| B₂O₃ | 7,9 | 7,0 | 6,0 | 7,5 | 9,4 |

Sämtliche Gläser der Tabelle enthalten 0,04 Gew.-% Fe₂O₃. Außerdem enthalten alle diese Gläser 0,04 Gew.-% BaO als Verunreinigungen sowie 0,19 Gew.-% Chlorid und 0,06 Gew.-% Fluorid als Läutermittel.

**Tabelle 2**

| Ausgewählte Eigenschaften von erfindungsgemäßen Gläsern (A) und Vergleichsgläsern (V) | | | | | |
|---|---|---|---|---|---|
| | A1 | A2 | A3 | V1 | V2 |
| α_{20/300} [10⁻⁶/K] | 5,7 | 5,7 | 5,6 | 5,04 | 5,7 |
| T_{g} [°C] | 558 | 570 | 574 | 578 | 565 |
| V_{A} [°C] | 1177 | 1185 | 1204 | 1214 | 1175 |
| "Schmelztemp." [°C] | 1412 | 1366 | 1394 | 1398 | 1500 |
| | 125 | 146 | 149 | 179 | 100 |
| Hydrolyt. Beständigkeit | (bezogen auf Norm 100) | (bezogen auf Norm 100) | (bezogen auf Norm 100) | (bezogen auf Norm 100) | (normiert) |
| | 102,1 | 103,3 | 103,4 | 106,2 | 100 |
| Zugfestigkeit | (bezogen auf Norm 100) | (bezogen auf Norm 100) | (bezogen auf Norm 100) | (bezogen auf Norm 100) | (normiert) |
| | 94 | 88 | 84 | 90 (bezogen Auf Norm 100) | 100 |
| Gemengepreis | (bezogen auf Norm 100) | (bezogen auf Norm 100) | (bezogen auf Norm 100) | | (normiert) |
| Solare Transmission | | | | | |
| (300-2500 nm) [%] | >92 | >92 | >92 | >92 | >92 |

**Tabelle 3**

| Zusammensetzungen (in mol-% auf Oxidbasis) von erfindungsgemäßen Gläsern (A) und einem Vergleichsgläsern (V) sowie Summe und Verhältnisse ausgewählter Komponenten | | | | | |
|---|---|---|---|---|---|
| | A1 | A2 | A3 | V1 | V2 |
| SiO₂ | 77,9 | 77,4 | 78,6 | 78,3 | 77,6 |
| Al₂O₃ | 4 | 3,9 | 3,9 | 3,9 | 4 |
| Na₂O | 6,3 | 6,6 | 6,2 | 5,8 | 6,7 |
| K₂O | 1,7 | 1,3 | 1,5 | 0,7 | 1,7 |
| CaO | 2,2 | 3,1 | 3,2 | 3,4 | 0,8 |
| MgO | 0 | 0,8 | 0,6 | 0,6 | 0 |
| B₂O₃ | 7,2 | 6,3 | 5,4 | 6,7 | 8,5 |
| BaO | 0,02 | 0,02 | 0,02 | 0,02 | 0,02 |
| Cl | 0,33 | 0,33 | 0,33 | 0,33 | 0,33 |
| F | 0,2 | 0,2 | 0,2 | 0,2 | 0,2 |
| Fe₂O₃ | 0,02 | 0,02 | 0,02 | 0,02 | 0,02 |
| Al₂O₃ / Σ R₂O | 0,5 | 0,49 | 0,51 | 0,60 | 0,48 |
| B₂O₃ / (B₂O₃ + Σ R₂O) | 0,47 | 0,44 | 0,41 | 0,51 | 0,50 |
| Σ RO / Σ R₂O | 0,2775 | 0,50 | 0,50 | 0,63 | 0,10 |
| Σ RO | 2,2 | 3,9 | 3,8 | 4,0 | 0,8 |
| SiO₂ / B₂O₃ | 10,8 | 12,3 | 14,6 | 11,7 | 9,1 |

Vergleichsbeispiel V1 ist für die erfindungemäße Verwendung ungeeignet aufgrund seines Ausdehnungskoeffizienten. Vergleichsbeispiel muss bei einer nachteilig hohen Schmelztemperatur erschmolzen werden.

Wie die Ausführungsbeispiele verdeutlichen, besitzen die erfindungsgemäßen Gläser folgende insbesondere für ihre erfindungsgemäße Verwendung vorteilhafte Eigenschaften:
- Sie weisen einen thermische Dehnung α_{20/300} zwischen > 5,3 x 10⁻⁶/K und 5,8 x 10⁻⁶/K, in bevorzugten Ausführungsformen von ca. 5,7 x 10⁻⁶/K, auf und sind damit angepasst an das Ausdehnungsverhalten von in Glas-Metall-Verbindungen für Röhrenkollektoren verwendeten Metallen, insbesondere von Metallwerkstoffen aus der Nr. 1.3981 der DIN 17745
- Sie weisen eine Transformationstemperatur von maximal 580 °C, in bevorzugten Ausführungsformen von maximal 575 °C auf. Mit diesen Transformationstemperaturen können die aus diesen Gläsern bestehenden Kollektor- bzw. Receiverrohre problemlos verarbeitet werden. Höhere Transformationstemperaturen würden einen höheren Energieverbrauch bei der Receiverfertigung bedeuten.
- Sie weisen eine Verarbeitungstemperatur V_{A} von maximal 1215 °C, in bevorzugten Ausführungsformen von maximal 1185 °C auf. Mit diesem Verarbeitungstemperaturen können die aus diesen Gläsern bestehenden Kollektor- bzw. Receiverrohre problemlos verarbeitet werden. Höhere Verarbeitungstemperaturen würde einen höheren Energieverbrauch bei der Receiverfertigung bedeuten.
- Die Gläser besitzen eine sehr hohe hydrolytische Beständigkeit, was für die Verarbeitung der Gläser und den Einsatz der Rohre von Vorteil ist.
- Sie besitzen eine hohe Zugfestigkeit, was für Verarbeitung und Einsatz der Rohre von Bedeutung ist.
- Die Gläser weisen die gewünscht hohe solar Transmission auf.
- Ihr Gemengepreis ist relativ niedrig. Er ist um ca. 10 % niedriger als der von für die erfindungsgemäße Verwendung bekannten Gläser.
- Die erfindungsgemäßen Gläser lassen sich gegenüber für die erfindungsgemäße Verwendung bekannten Gläsern bei deutlich erniedrigten Temperaturen, nämlich < 1500 °C, bevorzugt < 1400 °C schmelzen. Dadurch ist der Energieverbrauch um ca. 10 % erniedrigt. Außerdem wird die Nettoleistung des Schmelzaggregats erhöht.

Mit diesen Eigenschaften sind die Gläser gut und kostengünstig herstellbar. Sie lassen sich gut zu Rohren, auch mit größeren Durchmessern, verarbeiten. Diese sind hervorragend geeignet für die Verwendung als Glasrohr in einem Röhrenkollektor mit einer Glas-Metall-Verbindung.

## Patentansprüche

1. Verwendung eines Glases, enthaltend folgende Bestandteile:
| | | |
|---|---|---|
| SiO₂ | 73 - 77 | Gew.-% |
| B₂O₃ | 6 - < 8 | Gew.-% |
| Al₂O₃ | 6 - 6,5 | Gew.-% |
| Na₂O | 5,5 - 7 | Gew.-% |
| K₂O | 1-3 | Gew.-% |
| CaO | 0,5 - 3,2 | Gew.-% |
| MgO | 0-2 | Gew.-% |
| Fe₂O₃ | 50 - 400 | ppm |
| TiO₂ | 0 - < 100 | ppm |
wobei das Verhältnis der Summe der Erdalkalioxide (in mol-%) zu der Summe der Alkalioxide (in mol-%) ≤ 0,6 beträgt,
für ein Glasrohr in einem Röhrenkollektor mit einer Glas-Metall-Verbindung.

2. Verwendung nach Anspruch 1, wobei das Glas folgende Bestandteile enthält:
| | | |
|---|---|---|
| SiO₂ | 73 - 77 | Gew.-% |
| B₂O₃ | 6,7 - 7,5 | Gew.-% |
| Al₂O₃ | 6,3 - 6,5 | Gew.-% |
| Na₂O | 5,8 - 6,8 | Gew.-% |
| K₂O | 1 - 2 | Gew.-% |
| CaO | 2,5 - 3,2 | Gew.-% |
| MgO | 0,4 - 1 | Gew.-% |
| Fe₂O₃ | 70 - 130 | ppm |
| TiO₂ | 0 - < 100 | ppm. |
wobei das Verhältnis der Summe der Erdalkalioxide (in mol-%) zu der Summe der Alkalioxide (in mol-%) ≤ 0,6 beträgt.

3. Verwendung nach Anspruch 1 oder 2, wobei das Glas 0,1 - 0,3 Gew.-% Chlorid und / oder 0,1 - 0,3 Gew.-% Fluorid enthält.

4. Verwendung nach einem der Ansprüche 1 bis 3, wobei das Glas bis auf Verunreinigungen aus den genannten Bestandteilen besteht.

5. Verwendung nach einem der Ansprüche 1 bis 4, wobei die Summe der Erdalkalioxide im Glas > 0,9 mol-% und ≤ 3,9 mol-% beträgt.

6. Verwendung nach einem der Ansprüche 1 bis 5, wobei im Glas das Verhältnis der Summe der Erdalkalioxide (in mol-%) zu der Summe der Alkalioxide (in mol-%) > 0,1 und < 0,55 beträgt.

7. Verwendung nach einem der Ansprüche 1 bis 6, wobei im Glas das Verhältnis von Al₂O₃ (in mol-%) zu der Summe der Alkalioxide (in mol-%) < 0,6 beträgt.

8. Verwendung nach einem der Ansprüche 1 bis 7, wobei im Glas das Verhältnis von B₂O₃ (in mol-%) zu der Summe aus B₂O₃ (in mol-%) und der Summe der Alkalioxide (in mol-%) < 0,55 beträgt.

9. Verwendung nach einem der Ansprüche 1 bis 8, wobei im Glas das Verhältnis Fe²⁺ / Fe³⁺ 0,03 - 0,1, bevorzugt 0,045 - 0,055 beträgt.

10. Verwendung nach einem der Ansprüche 1 bis 9, wobei das Metall der Glas-Metall-Verbindung aus einem Metallwerkstoff Nr. 1.3981 der DIN 17745 besteht.

11. Glas, enthaltend folgende Bestandteile:
| | | |
|---|---|---|
| SiO₂ | 73 - 77 | Gew.-% |
| B₂O₃ | 6 - < 8 | Gew.-% |
| Al₂O₃ | 6 - 6,5 | Gew.-% |
| Na₂O | 5,5 - 7 | Gew.-% |
| K₂O | 1 - 3 | Gew.-% |
| CaO | 0,5 - 3,2 | Gew.-% |
| MgO | 0 - 2 | Gew.-% |
| Fe₂O₃ | 50 - 400 | ppm |
| TiO₂ | 0 - < 100 | ppm |
wobei das Verhältnis der Summe der Erdalkalioxide (in mol-%) zu der Summe der Alkalioxide (in mol-%) ≤ 0,6 beträgt.

12. Glas nach Anspruch 11, wobei das Glas folgende Bestandteile enthält:
| | | |
|---|---|---|
| SiO₂ | 73 - 77 | Gew.-% |
| B₂O₃ | 6,7 - 7,5 | Gew.-% |
| Al₂O₃ | 6,3 - 6,5 | Gew.-% |
| Na₂O | 5,8 - 6,8 | Gew.-% |
| K₂O | 1 - 2 | Gew.-% |
| CaO | 2,5 - 3,2 | Gew.-% |
| MgO | 0,4 - 1 | Gew.-% |
| Fe₂O₃ | 70 - 130 | ppm |
| TiO₂ | 0 - < 100 | ppm. |
wobei das Verhältnis der Summe der Erdalkalioxide (in mol-%) zu der Summe der Alkalioxide (in mol-%) ≤ 0,6 beträgt.

13. Glas nach Anspruch 11 oder 12, wobei das Glas 0,1 - 0,3 Gew.-% Chlorid und / oder 0,1 - 0,3 Gew.-% Fluorid enthält.

14. Glas nach einem der Ansprüche 11 bis 13, wobei das Glas bis auf Verunreinigungen aus den genannten Bestandteilen besteht.

15. Glas nach einem der Ansprüche 11 bis 14, wobei im Glas das Verhältnis Fe²⁺ / Fe³⁺ 0,03 - 0,1, bevorzugt 0,045 - 0,055 beträgt.

## Claims

1. Use of a glass containing the following constituents:
| | |
|---|---|
| SiO₂ | 73 - 77 wt% |
| B₂O₃ | 6 - < 8 wt% |
| Al₂O₃ | 6 - 6.5 wt% |
| Na₂O | 5.5 - 7 wt% |
| K₂O | 1 - 3 wt% |
| CaO | 0.5 - 3.2 wt% |
| MgO | 0 - 2 wt% |
| Fe₂O₃ | 5 0 - 400 ppm |
| TiO₂ | 0 - < 100 ppm |
the ratio of the sum of the alkaline-earth metal oxides (in mol%) to the sum of the alkali metal oxides (in mol%) being ≤ 0.6, for a glass tube in a tube collector comprising a glass-metal bond.

2. Use according to Claim 1, **characterized in that** the glass contains the following constituents:
| | |
|---|---|
| SiO₂ | 73 - 77 wt% |
| B₂O₃ | 6.7 - 7.5 wt% |
| Al₂O₃ | 6.3 - 6.5 wt% |
| Na₂O | 5.8 - 6.8 wt% |
| K₂O | 1 - 2 wt% |
| CaO | 2.5 - 3.2 wt% |
| MgO | 0.4 - 1 wt% |
| F₂O₃ | 7 0 - 130 ppm |
| TiO₂ | 0 - < 100 ppm, |
the ratio of the sum of the alkaline-earth metal oxides (in mol%) to the sum of the alkali metal oxides (in mol%) being ≤ 0.6.

3. Use according to Claim 1 or 2, **characterized in that** the glass contains 0.1 - 0.3 wt% chloride and/or 0.1 - 0.3 wt% fluoride.

4. Use according to one of Claims 1 to 3, **characterized in that** except for impurities, it consists of the said constituents.

5. Use according to one of Claims 1 to 4, **characterized in that** the sum of the alkalineearth metal oxides in the glass is > 0.9 mol% and ≤ 3.9 mol%.

6. Use according to one of Claims 1 to 5, **characterized in that** the ratio of the sum of the alkaline-earth metal oxides (in mol%) to the sum of the alkali metal oxides (in mol%) in the glass is > 0.1 and < 0.55.

7. Use according to one of Claims 1 to 6, **characterized in that** the ratio of Al₂O₃ (in mol%) to the sum of the alkali metal oxides (in mol%) in the glass is < 0.6.

8. Use according to one of Claims 1 to 7, **characterized in that** the ratio of B₂O₃ (in mol%) to the sum of B₂O₃ (in mol%) and the sum of the alkali metal oxides (in mol%) in the glass is < 0.55.

9. Use according to one of Claims 1 to 8, **characterized in that** the ratio Fe²⁺ / Fe³⁺ in the glass is 0.03 - 0.1, preferably 0.045 - 0.055.

10. Use according to one of Claims 1 to 9, **characterized in that** the metal of the glass-metal bond consists of a metal material No 1.3981 according to DIN 17745.

11. Glass, containing the following constituents:
| | |
|---|---|
| SiO₂ | 73 - 77 wt% |
| B₂O₃ | 6 - < 8 wt% |
| Al₂O₃ | 6 - 6.5 wt% |
| Na₂O | 5.5 - 7 wt% |
| K₂O | 1 - 3 wt% |
| CaO | 0.5 - 3.2 wt% |
| MgO | 0 - 2 wt% |
| Fe₂O₃ | 5 0 - 400 ppm |
| TiO₂ | 0 - < 100 ppm |
the ratio of the sum of the alkaline-earth metal oxides (in mol%) to the sum of the alkali metal oxides (in mol%) being ≤ 0.6.

12. Glass according to Claim 11, **characterized in that** the glass contains the following constituents:
| | |
|---|---|
| SiO₂ | 73 - 77 wt% |
| B₂O₃ | 6.7 - 7.5 wt% |
| Al₂O₃ | 6.3 - 6.5 wt% |
| Na₂O | 5.8 - 6.8 wt% |
| K₂O | 1 - 2 wt% |
| CaO | 2.5 - 3.2 wt% |
| MgO | 0.4 - 1 wt% |
| Fe₂O₃ | 7 0 - 130 ppm |
| TiO₂ | 0 - < 100 ppm |
the ratio of the sum of the alkaline-earth metal oxides (in mol%) to the sum of the alkali metal oxides (in mol%) being ≤ 0.6.

13. Glass according to Claim 11 or 12, **characterized in that** the glass contains 0.1 - 0.3 wt% chloride and/or 0.1 - 0.3 wt% fluoride.

14. Glass according to one of Claims 11 to 13, **characterized in that** except for impurities, it consists of the said constituents.

15. Glass according to one of Claims 11 to 14, **characterized in that** the ratio Fe²⁺ / Fe³⁺ in the glass is 0.03 - 0.1, preferably 0.045 - 0.055.

## Revendications

1. Utilisation d'un verre, contenant les constituants suivants :
| | | |
|---|---|---|
| SiO₂ | 73 à 77 | % en poids |
| B₂O₃ | 6 à < 8 | % en poids |
| Al₂O₃ | 6 à 6,5 | % en poids |
| Na₂O | 5,5 à 7 | % en poids |
| K₂O | 1 à 3 | % en poids |
| CaO | 0,5 à 3,2 | % en poids |
| MgO | 0 à 2 | % en poids |
| Fe₂O₃ | 50 à 400 | ppm |
| TiO₂ | 0 à < 100 | ppm |
le rapport entre la somme des oxydes alcalino-terreux (en % en moles) et la somme des oxydes alcalins (en % en moles) étant ≤ 0,6,
pour un tube en verre dans un collecteur de tubes comprenant une liaison verre-métal.

2. Utilisation selon la revendication 1, dans laquelle le verre contient les constituants suivants :
| | | |
|---|---|---|
| SiO₂ | 73 à 77 | % en poids |
| B₂O₃ | 6,7 à 7,5 | % en poids |
| Al₂O₃ | 6,3 à 6,5 | % en poids |
| Na₂O | 5,8 à 6,8 | % en poids |
| K₂O | 1 à 2 | % en poids |
| CaO | 2,5 à 3,2 | % en poids |
| MgO | 0,4 à 1 | % en poids |
| Fe₂O₃ | 70 à 130 | ppm |
| TiO₂ | 0 à < 100 | ppm |
le rapport entre la somme des oxydes alcalino-terreux (en % en moles) et la somme des oxydes alcalins (en % en moles) étant ≤ 0,6.

3. Utilisation selon la revendication 1 ou 2, dans laquelle le verre contient 0,1 à 0,3 % en poids de chlorure et/ou 0,1 à 0,3 % en poids de fluorure.

4. Utilisation selon l'une quelconque des revendications 1 à 3, dans laquelle le verre est constitué des constituants mentionnés, à l'exception des impuretés.

5. Utilisation selon l'une quelconque des revendications 1 à 4, dans laquelle la somme des oxydes alcalino-terreux dans le verre est > 0,9 % en moles et ≤ 3,9 % en moles.

6. Utilisation selon l'une quelconque des revendications 1 à 5, dans laquelle le rapport entre la somme des oxydes alcalino-terreux (en % en moles) et la somme des oxydes alcalins (en % en moles) dans le verre est > 0,1 et < 0,55.

7. Utilisation selon l'une quelconque des revendications 1 à 6, dans laquelle le rapport entre Al₂O₃ (en % en moles) et la somme des oxydes alcalins (en % en moles) dans le verre est < 0,6.

8. Utilisation selon l'une quelconque des revendications 1 à 7, dans laquelle le rapport entre B₂O₃ (en % en moles) et la somme de B₂O₃ (en % en moles) et la somme des oxydes alcalins (en % en moles) dans le verre est < 0,55.

9. Utilisation selon l'une quelconque des revendications 1 à 8, dans laquelle le rapport Fe²⁺/Fe³⁺ dans le verre est de 0,03 à 0,1, de préférence de 0,045 à 0,055.

10. Utilisation selon l'une quelconque des revendications 1 à 9, dans laquelle le métal de la liaison verre-métal est constitué d'un matériau métallique de n° 1.3981 de DIN 17745.

11. Verre, contenant les constituants suivants :
| | | |
|---|---|---|
| SiO₂ | 73 à 77 | % en poids |
| B₂O₃ | 6 à < 8 | % en poids |
| Al₂O₃ | 6 à 6,5 | % en poids |
| Na₂O | 5,5 à 7 | % en poids |
| K₂O | 1 à 3 | % en poids |
| CaO | 0,5 à 3,2 | % en poids |
| MgO | 0 à 2 | % en poids |
| Fe₂O₃ | 50 à 400 | ppm |
| TiO₂ | 0 à < 100 | ppm |
le rapport entre la somme des oxydes alcalino-terreux (en % en moles) et la somme des oxydes alcalins (en % en moles) étant ≤ 0,6.

12. Verre selon la revendication 11, dans lequel le verre contient les constituants suivants :
| | | |
|---|---|---|
| SiO₂ | 73 à 77 | % en poids |
| B₂O₃ | 6,7 à 7,5 | % en poids |
| Al₂O₃ | 6,3 à 6,5 | % en poids |
| Na₂O | 5,8 à 6,8 | % en poids |
| K₂O | 1 à 2 | % en poids |
| CaO | 2,5 à 3,2 | % en poids |
| MgO | 0,4 à 1 | % en poids |
| Fe₂O₃ | 70 à 130 | ppm |
| TiO₂ | 0 à < 100 | ppm |
le rapport entre la somme des oxydes alcalino-terreux (en % en moles) et la somme des oxydes alcalins (en % en moles) étant ≤ 0,6.

13. Verre selon la revendication 11 ou 12, dans lequel le verre contient 0,1 à 0,3 % en poids de chlorure et/ou 0,1 à 0,3 % en poids de fluorure.

14. Verre selon l'une quelconque des revendications 11 à 13, dans lequel le verre est constitué des constituants mentionnés, à l'exception des impuretés.

15. Verre selon l'une quelconque des revendications 11 à 14, dans lequel le rapport Fe²⁺/Fe³⁺ dans le verre est de 0,03 à 0,1, de préférence de 0,045 à 0,055.
